Europäisches Patentamt

European Patent Office

Office européen des brevets

(11) EP 0 806 629 A1

(19)

(12) **DEMANDE DE BREVET EUROPEEN**

(43) Date de publication:
     12.11.1997 Bulletin 1997/46

(51) Int Cl.⁶: $G01B\ 11/275$, $G01B\ 11/24$

(21) Numéro de dépôt: 97401006.8

(22) Date de dépôt: 05.05.1997

(84) Etats contractants désignés:
     DE GB IT

(30) Priorité: 06.05.1996 FR 9605609

(71) Demandeur: MULLER BEM
     F-28000 Chartres (FR)

(72) Inventeurs:
     • Muller, Patrice
       28000 Chartres (FR)
     • Coetsier, Paul
       77400 Pomponne (FR)

(74) Mandataire: Kaspar, Jean-Georges
     Cabinet Tony-Durand,
     78, avenue Raymond Poincaré
     75116 Paris (FR)

(54) **Dispositif pour le contrôle géométrique de véhicule**

(57)    Dans un dispositif pour le contrôle géométrique d'un véhicule, on utilise des moyens aptes à faire varier l'aspect de l'élément fixé à une jante de roue de véhicule au moyen d'une griffe de fixation ou analogue en fonction de l'angle de visée sous lequel il est vu, sans constituer une image en perspective de cet élément.

Application au contrôle géométrique de véhicule à roues.

Fig.5

**Description**

L'invention est relative à un dispositif pour le contrôle géométrique de véhicule, du type comportant au moins un élément apte à être solidarisé à une jante de roue de véhicule au moyen d'une griffe de fixation ou analogue.

On connaît de nombreux dispositifs de contrôle géométrique de véhicules, dans lesquels une tête de mesure munie de capteurs appropriés est fixée à une jante de roue de véhicule et transmet par liaison filaire ou par liaison sans fil des signaux représentatifs de paramètres physiques à une unité centrale programmable, apte à calculer la géométrie du véhicule.

Cependant, ces têtes de mesure connues comportant des capteurs fragiles et des organes électroniques sensibles aux chocs présentent un risque d'endommagement lors des opérations de contrôle géométrique, en particulier lors de la fixation sur la jante ou lors de la dépose de la jante.

Pour remédier à cet inconvénient, on a prévu de fixer des cibles ou des miroirs sur les jantes de roues de véhicules, de manière à éclairer ces cibles ou ces miroirs et à observer l'image réfléchie au moyen d'une caméra ou organe d'observation analogue. Un appareil de mesure d'axe transportable par laser de ce type est décrit dans le document "KRAFTHAND", cahier 9, 5 mai 1979, page 608. Un autre appareil de ce type est décrit dans le document WO 94/05969.

Ces appareillages à cible ou à miroir fixés sur les jantes des roues présentent l'inconvénient de nécessiter un dispositif d'analyse d'image et de calcul relativement complexe pour déterminer l'angle de visée par corrélation de l'image en perspective ou en réflexion observée avec l'image en grandeur réelle de chaque cible ou de chaque miroir. En outre, du fait de la distance du banc d'observation aux cibles ou aux miroirs, la sélectivité des mesures est faible, ce qui impose l'utilisation de capteurs de grande précision ou de caméras d'observation matricielles à haute résolution.

L'invention a pour but de remédier aux inconvénients de la technique connue, en créant un nouveau dispositif de grande sélectivité permettant l'usage de caméras de type connu, en particulier de caméras à CCD linéaire, et évitant le risque d'endommagement des têtes de mesure électroniques de l'art antérieur.

L'invention a pour objet un dispositif pour le contrôle géométrique de véhicule, du type comportant au moins un élément apte à être solidarisé à une jante de roue de véhicule au moyen d'une griffe de fixation ou analogue, caractérisé en ce que le dispositif comporte des moyens aptes à faire varier l'aspect de l'élément en fonction de l'angle de visée sous lequel il est vu, sans constituer une image en perspective de cet élément.

Selon d'autres caractéristiques :

- les dits moyens de variation d'aspect sont indépendants de la distance séparant le point de visée du dispositif ;
- les dits moyens comprennent au moins une paire de grilles de moiré espacées l'une de l'autre ;
- au moins une grille de moiré la plus proche du point de visée comporte un moyen de repérage définissant une origine de mesure ;
- dans une paire de grilles, deux grilles de moiré espacées sont sensiblement parallèles l'une à l'autre ;
- dans une paire de grilles, deux grilles de moiré espacées sont disposées sur deux surfaces formant un angle l'une par rapport à l'autre ;
- dans une paire de grilles, deux grilles de moiré espacées comportent chacune une première grille pour une mesure angulaire fine et une deuxième grille pour une mesure angulaire absolue;
- un élément de dispositif comporte au moins deux paires de grilles, qui ne sont pas parallèles entre elles ;
- le dispositif comporte au moins une caméra ou moyen d'observation apte à observer l'aspect de chaque élément fixé à une jante de roue de véhicule et à transmettre un signal représentatif de ladite observation à une unité centrale programmable, de manière à calculer des angles d'orientation dudit élément et à en déduire des paramètres physiques représentatifs de la géométrie du véhicule ;
- le dispositif comporte deux caméras espacées d'une distance supérieure à la voie du véhicule à contrôler.

Un moyen simple pour faire varier l'aspect d'un élément en fonction de l'angle de visée sous lequel il est vu est en effet l'utilisation des techniques de mesure par moiré. On connaît de nombreuses techniques de mesure par moiré : moiré projeté, moiré d'ombre, moiré de superposition et autre technique d'interférence équivalente. Cependant, ces techniques de mesure par moiré étaient utilisées principalement jusqu'ici pour la vérification de la surface d'un objet à tester et son contrôle de conformité par rapport à une surface de référence. De telles techniques de contrôle de surface sont notamment connues d'après les documents FR 2.658.601, FR 2.614.691, FR 2.580.066 et FR 2.520.106. Aucun de ces documents n'indique, ni ne suggère d'appliquer la technique de mesure par moiré au contrôle géométrique de véhicule à roues.

L'invention sera mieux comprise grâce à la description qui va suivre donnée à titre d'exemple non limitatif en référence aux dessins annexés dans lesquels :

La figure 1 représente schématiquement le principe de mesure mis en oeuvre dans l'invention.

La figure 2 représente schématiquement un agencement explicatif d'une paire de grilles de moiré espacées l'une de l'autre pour la mise en oeuvre de l'invention.

La figure 3 représente schématiquement un autre agencement explicatif d'une autre paire de grilles de moiré espacées l'une de l'autre pour la mise en oeuvre de l'invention.

La figure 4 représente schématiquement l'aspect d'une observation de moiré correspondant à une incidence normale sur un agencement de deux grilles selon la figure 2 ou la figure 3.

La figure 5 représente schématiquement l'aspect d'une observation de moiré sous incidence angulaire d'un agencement de deux grilles de moiré selon la figure 2 ou la figure 3.

La figure 6 représente schématiquement un premier mode de réalisation d'un élément de dispositif selon l'invention fixé à une roue de véhicule.

La figure 7 représente schématiquement un deuxième mode de réalisation d'un élément de dispositif selon l'invention fixé à une roue de véhicule.

La figure 8 représente schématiquement un troisième mode de réalisation d'un élément de dispositif selon l'invention fixé à une jante de roue de véhicule.

La figure 9 représente schématiquement un quatrième mode de réalisation d'un élément de dispositif selon l'invention fixé à une jante de roue de véhicule.

La figure 10 représente schématiquement une vue de dessus d'un dispositif selon l'invention.

La figure 11 représente schématiquement une vue de dessus d'un autre dispositif selon l'invention.

La figure 12 représente schématiquement un organigramme de fonctionnement d'un dispositif selon l'invention.

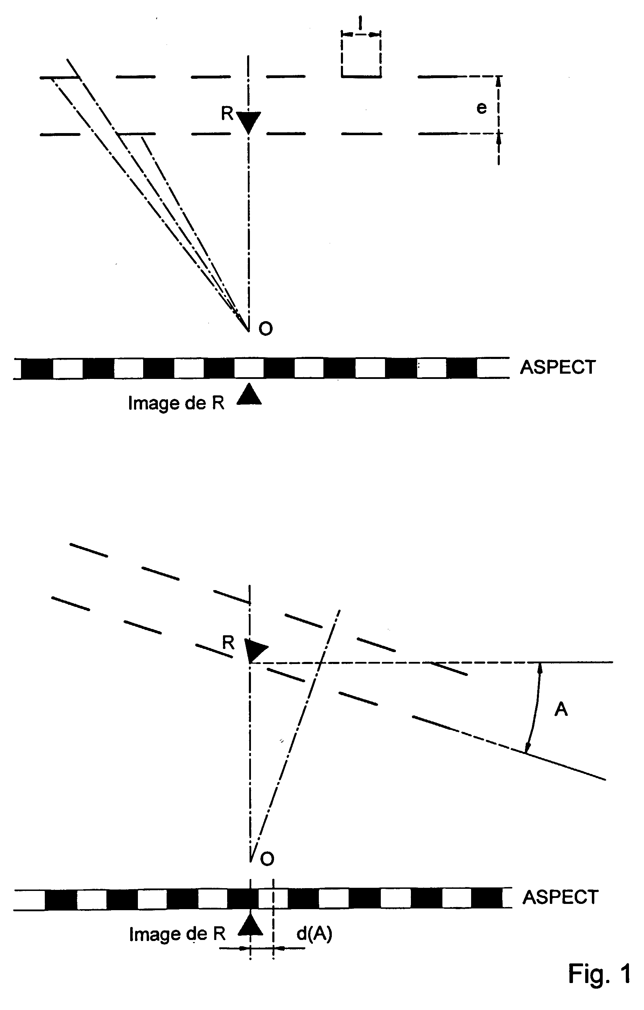

En référence à la figure 1, deux grilles de traits noirs régulièrement espacés d'un intervalle correspondant à leur largeur I sont observées depuis un centre 0 d'observation. Les grilles formées de traits sont séparées l'une de l'autre par un écartement e, de sorte que l'observation depuis le centre 0 fait apparaître une frange centrale claire, sensiblement symétrique par rapport au repère R formant index situé sur le support des grilles, en face du centre d'observation 0, et des franges latérales alternativement sombres et claires, symétriques par rapport à cette frange centrale.

Lorsque la paire de grilles est tournée d'un angle A, l'observateur placé au centre d'observation 0 a la sensation d'un déplacement de la frange centrale claire par rapport à l'image du repère R formant index, d'une distance correspondant à un décalage d (A) qui est une fonction trigonométrique du déplacement angulaire A.

Cette technique de moiré permet par conséquent de relier l'inclinaison angulaire A à un déplacement de la frange centrale claire (ou sombre).

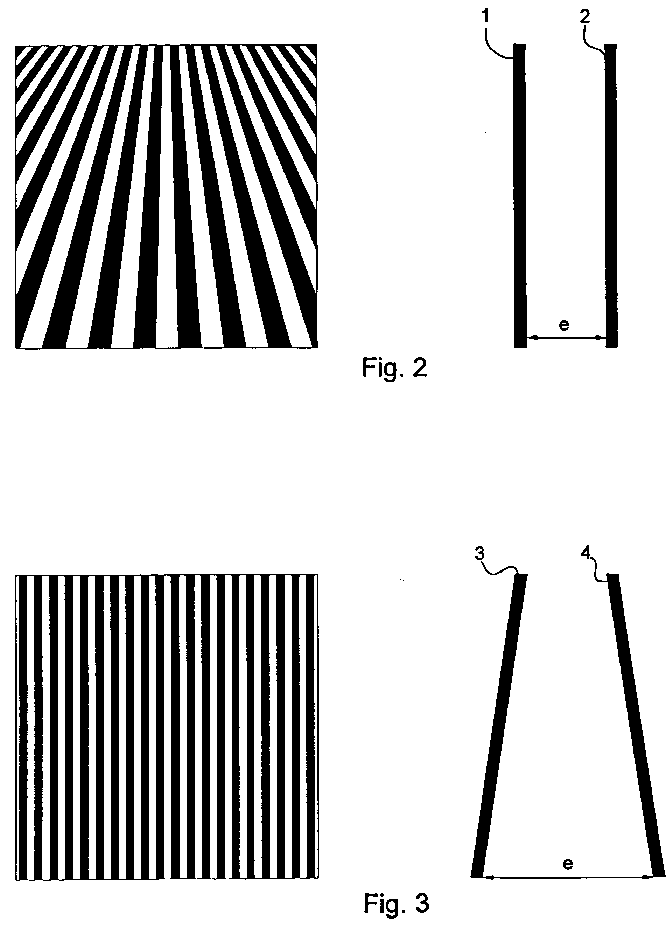

En référence à la figure 2, deux grilles 1 et 2 vues en section sont sensiblement parallèles l'une à l'autre et sont superposées pour permettre une observation de moiré. Les grilles 1 et 2 sont de préférence identiques et comprennent des traits sensiblement trapézoïdaux, à pas progressif. Les grilles sont de préférence réalisées sur des panneaux carrés ou rectangulaires de dimensions prédéterminées en fonction de la résolution angulaire recherchée.

En référence à la figure 3, deux autres grilles 3 et 4 sont représentées et forment entre elles un angle convergeant vers le haut. Les grilles 3 et 4 sont de préférence identiques et constituées par des traits de largeur constante, parallèles l'un à l'autre, et séparés par des espaces transparents de largeur correspondant à la largeur des traits.

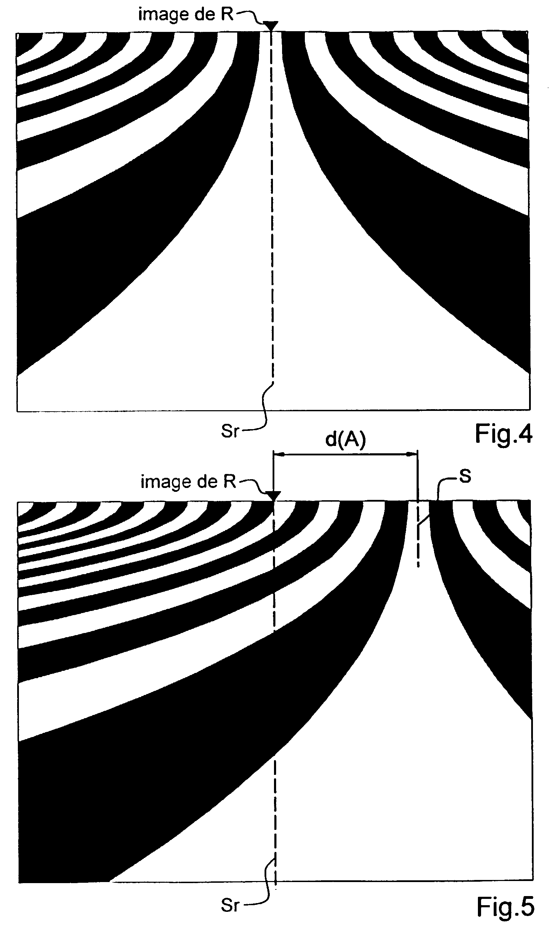

En référence à la figure 4, une observation de moiré perpendiculaire à une paire de grilles 1 et 2 ou perpendiculaire au plan bissecteur d'une paire de grilles 3 et 4 est représentée. On constate que la forme des courbes de moiré obtenue est sensiblement symétrique par rapport à l'axe Sr passant par l'image de l'index de repérage R correspondant au repère R formant index situé sur le support des grilles.

Lorsque le repère R est situé sur la normale abaissée du centre d'observation 0 sur le support des grilles, l'aspect de l'observation de moiré est symétrique par rapport à l'axe Sr passant par l'image du repère R observée au centre d'observation 0.

L'interférence des traits des grilles 1 et 2 de la figure 2 (ou de grilles 3 et 4 de la figure 3) produit un aspect de franges courbes s'évasant vers le bas alternativement sombres et claires.

L'espacement angulaire de deux franges adjacentes sombres (ou claires) situées d'un même côté de l'image du repère R est une fonction trigonométrique f de la largeur de trait, de l'écartement des grilles de trait et du nombre ordinal de la frange considérée.

En référence à la figure 5, lorsque la paire de grilles est tournée d'un angle A similaire à l'angle A de la figure 1, l'observation de moiré fait apparaître un déplacement des franges d'un décalage d (A) qui est une fonction trigonométrique de l'angle d'inclinaison A.

En outre, le comptage du nombre de franges correspondant au décalage d (A) est facilité en relevant le nombre de franges suivant la droite d'intersection Sr passant par l'image de l'index de repérage R. Ainsi, à titre d'exemple, le nombre de franges depuis la première ligne de moiré est de trois dans le cas de la figure 5.

Ainsi, dans le cas où la frange centrale de symétrie d'axe S sort du support des grilles en résultat d'une rotation importante, il suffit de compter le nombre de franges coupées par la droite Sr passant par l'image de l'index de repérage R pour en déduire la position angulaire du support des grilles au moyen de la formule suivante :

$$A = a + \sum_{i=1}^{n} f(i),$$

où A est l'angle de rotation du support, a est l'angle élémentaire de rotation à partir de la frange la plus proche de l'image du repère R, i est le numéro de frange et f(i) est la fonction trigonométrique précitée associée à la frange numéro i.

Un avantage important de l'invention est le suivant : compte tenu de ce que les observations sont indépendantes de la distance séparant le point d'observation de la paire de grilles observée, le champ angulaire reste constant de sorte que l'aspect d'un panneau support de grilles est invariant lorsque son éloignement au centre d'observation augmente.

Il en résulte que la précision de mesure angulaire du dispositif est indépendante de la distance du panneau support de grilles au centre d'observation.

L'invention pallie ainsi les inconvénients de la technique connue, dans laquelle l'image réfléchie ou l'image en perspective d'une cible diminuait avec la distance et dans laquelle la précision de mesure angulaire diminuait par conséquent fortement avec la distance.

On définit la dimension et l'écartement des traits en fonction de la précision angulaire recherchée et du nombre de franges visibles. A cet effet, il est préféré d'utiliser deux paires de grilles de moiré dont la première est une paire de grilles du genre de la figure 1, dite à moiré uniforme, pour effectuer une mesure angulaire fine, et dont la deuxième est une paire de grilles du genre des figures 2 et 3, dite à moiré progressif, pour effectuer une mesure angulaire absolue pour déterminer les numéros des franges vues sur le moiré uniforme. A titre d'exemple, la mesure fine correspond à une précision angulaire de 30 secondes d'arc, tandis que la mesure angulaire absolue par rapport à un index de repérage correspond à une précision absolue de 30 minutes d'arc.

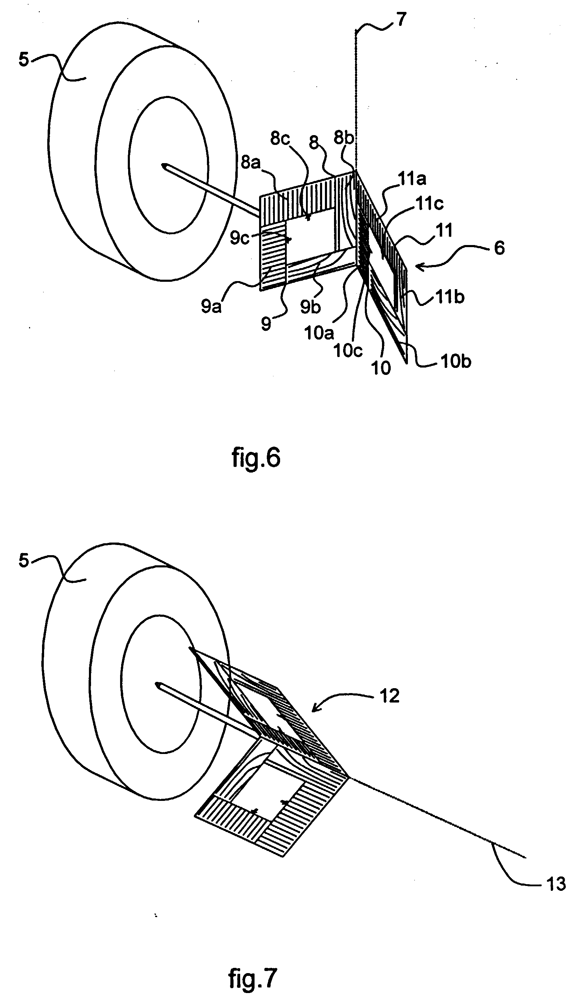

En référence à la figure 6, on a monté sur une roue 5 de véhicule un élément 6 de dispositif en forme de dièdre ou de livre ouvert dont l'axe 7 est sensiblement vertical. Cet élément 6 porte quatre paires 8 à 11 de grilles, dont chaque paire comporte une paire de grilles 8a à 11a de moiré uniforme pour la précision et une paire de grilles 8b à 11b de moiré progressif pour la mesure absolue. Les index 8c à 11c de repérage sont désignés par des flèches réalisant un contraste d'intensité lumineuse et peuvent être réalisés sous forme de diodes électro-luminescentes, ou alternativement sous forme d'interruptions d'une paire de grilles laissant apparaître un espace noir ou blanc d'aspect invariant, ou encore sous forme d'un évidement pratiqué à travers des paires 8 à 11 de grilles. Les paires 8 à 11 de grilles sont réalisées par exemple de part et d'autre d'un panneau de verre par gravure mécanique ou chimique ou par dépôt d'une encre, ou encore par collage de fils, ou autre moyen de réalisation de traits noirs.

En référence à la figure 7, un autre mode de réalisation d'un élément 12 de dispositif selon l'invention est en forme de dièdre ou de livre ouvert dont l'axe 13 est sensiblement horizontal. Cet élément est sensiblement similaire à l'élément de la figure 6 sur lequel est effectuée une rotation de 90° dans un plan vertical et une translation pour faire coïncider l'axe du dièdre avec l'axe de la roue.

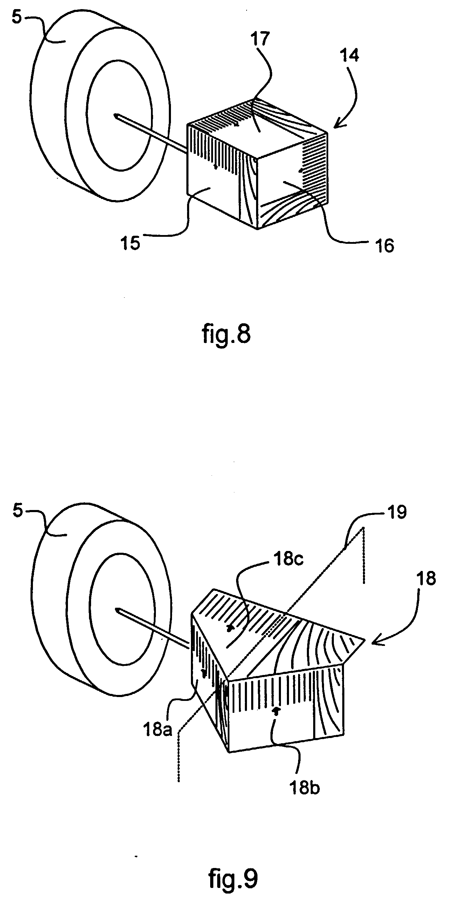

En référence à la figure 8, un autre mode de réalisation d'élément 14 de dispositif selon l'invention est en forme de cube comportant trois faces observables : deux faces verticales 15 et 16 portant chacune une paire de grilles, et une face horizontale 17 située du côté supérieur.

En référence à la figure 9, un autre mode de réalisation d'élément 18 de dispositif selon l'invention est en forme de dièdre saillant réalisé sous forme de trièdre formé de trois plans 18a à 18c formant par exemple un angle de 120° deux à deux, et orienté de manière que le plan bissecteur 19 des deux plans 18a, 18b soit parallèle au plan de la roue 5.

Les formes de réalisation des figures 6 à 9 sont particulièrement avantageuses pour la mesure du braquage des roues directrices d'un véhicule en évitant ainsi l'utilisation de plateaux rotatifs pour la mesure du braquage.

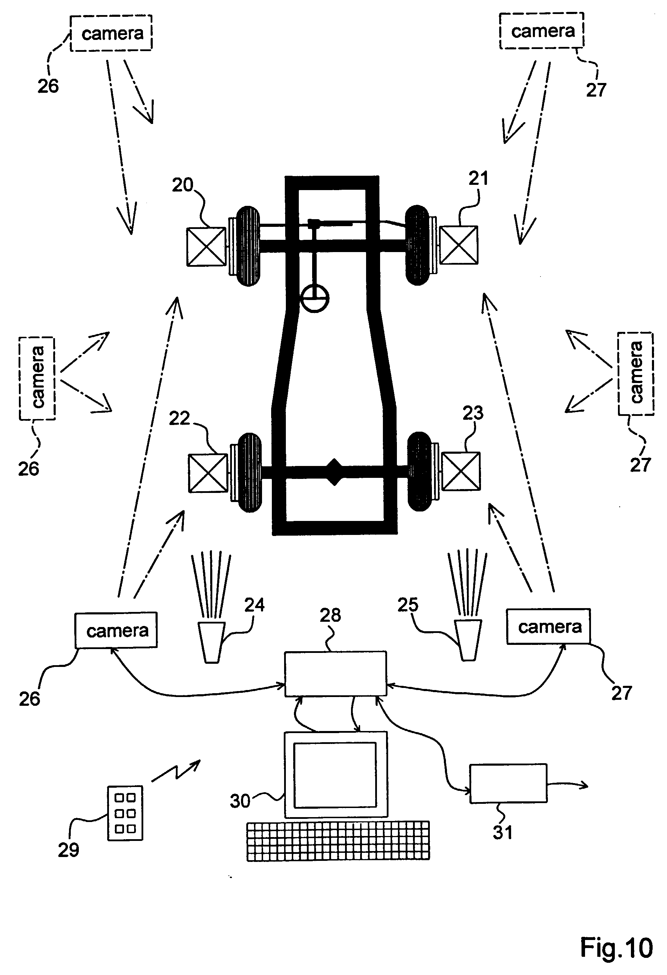

En référence à la figure 10, un agencement général de dispositif selon l'invention est représenté avec quatre éléments 20 à 23 de dispositifs fixés aux quatre roues du véhicule à contrôler et éclairés par des projecteurs lumineux 24 et 25. Les éléments 20 à 23 de dispositif fixés aux roues du véhicule sont observés par une paire de caméras 26, 27, constituées chacune par exemple d'une caméra à CCD linéaire et d'un miroir oscillant monté sur un galvanomètre ou autre organe d'entraînement en rotation pour couvrir tout le champ utile d'observation. Les caméras 26 et 27 sont reliées à une unité centrale programmable 28 permettant la visualisation sur un écran 30 et reliée d'une part à une télécommande 29 d'affichage mobile permettant de répéter les indications de l'écran 30 et d'autre part à un réseau externe 31 permettant la connexion directe à une base de données de véhicules ou à un CD ROM intégré dans l'unité centrale programmable 28.

Comme on le voit, les caméras à CCD linéaire, par exemple du type décrit dans le document FR 2.711.238 peuvent être placées par paire du côté des roues arrière du véhicule, ou alternativement entre les roues avant et les roues arrière, ou encore du côté des roues avant du véhicule à contrôler.

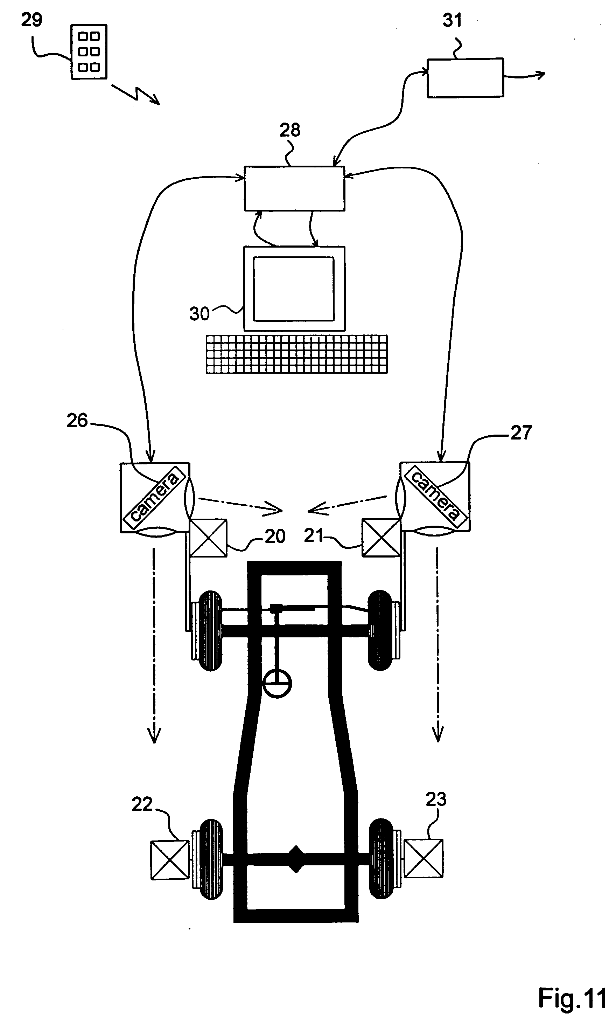

En référence à la figure 11, un autre agencement de dispositif est représenté avec quatre éléments 20 à 23 de dispositifs, parmi lesquels un couple 20, 21 d'éléments de dispositifs est destiné à des mesures transversales relatives à l'essieu avant, un troisième élément 22 est destiné aux mesures du côté longitudinal gauche et un quatrième élément 23 est destiné aux mesures du côté longitudinal droit.

Dans cet exemple de réalisation, les caméras 26 et 27 montées sur l'essieu avant directeur possèdent chacune un champ longitudinal d'observation, en direction des éléments 22 et 23 respectivement, et un champ transversal d'observation, en direction des éléments 20 et 21 respectivement.

Les caméras 26 et 27 sont avantageusement des caméras à CCD linéaire et à miroir oscillant; l'invention couvre également toute autre variante de réalisation, dans laquelle les mesures dans le sens transversal sont effectuées à l'aide de fentes d'observation transversale (technique de l'appareil 8675 fabriqué par le déposant de la présente demande) ou à l'aide de capteurs potentiométriques (technique de l'appareil 8670 fabriqué par le déposant de la présente demande).

Des inclinomètres peuvent être prévus pour acquérir les paramètres nécessaires au changement de coordonnées, afin d'exprimer les mesures dans un repère absolu (repère défini de deux plans verticaux et un plan horizontal).

L'invention couvre également la variante non représentée dans laquelle les caméras 26 et 27 sont montées solidaires de l'essieu arrière, sur l'axe ou bien en avant ou encore en arrière des roues arrière. Dans ce cas, les mesures transversales sont effectuées relativement à l'essieu arrière.

Les chiffres de référence identiques aux chiffres de la figure 10 désignent des éléments identiques ou fonctionnellement équivalents aux éléments de la figure 10 qui ont été décrits en référence à cette figure.

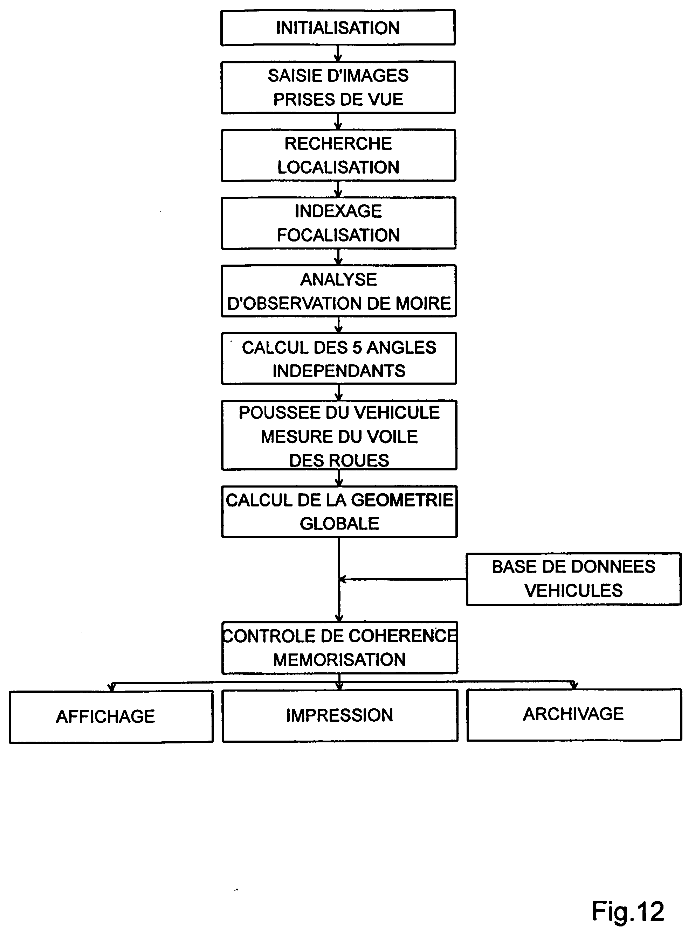

En référence à la figure 12, un programme de fonctionnement de dispositif selon l'invention comprend les étapes suivantes : une étape d'initialisation pendant laquelle les conditions d'éclairement sont établies par allumage de projecteurs 24, 25 si nécessaire ; une étape de saisie d'images et de prises de vue permettant de vérifier le fonctionnement général du système ; une étape de recherche et de localisation des éléments 20 à 23 fixés aux roues du véhicule ; une étape de recherche du repère d'indexage R de chaque élément 20 à 23 et de focalisation sur ce repère d'indexage ; une étape d'analyse d'observation de moiré permettant de déterminer des valeurs de décalage qui sont des fonctions trigonométriques d'inclinaison angulaire selon un axe géométrique recherché; une étape de calcul des angles indépendants permettant de définir la position de chaque élément 20 à 23 sur chaque roue de véhicule ; une étape de poussée du véhicule pour mesurer le voile de chaque roue et mémoriser des paramètres de correction de mesure ; une étape de calcul de la géométrie globale du véhicule ; une étape de contrôle de cohérence et de mémorisation du contrôle de géométrie effectué en liaison avec une base de données de véhicules accessible au moyen d'un réseau téléphonique ou sans fil ou résidente sur une mémoire permanente contenue dans l'unité centrale programmable du dispositif.

Les résultats de contrôle géométrique du véhicule sont affichés à l'écran, imprimés, ou éventuellement archivés.

L'invention décrite en référence à des modes de réalisation particuliers n'y est nullement limitée, mais couvre toutes modifications de forme et de technique de moiré et toutes variantes de réalisation dans lesquelles le dispositif comporte des moyens aptes à faire varier l'aspect de l'élément fixé à une roue du véhicule en fonction de l'angle de visée sous lequel il est vu.

Ainsi, l'invention couvre également les variantes selon lesquelles une grille de moiré est projetée sur une grille d'un élément fixé à une roue du véhicule ; ou une autre variante dans laquelle les deux grilles sont projetées sur un panneau à fond uniforme fixé sur le véhicule, ledit panneau n'étant pas nécessairement plan.

## Revendications

1. Dispositif pour le contrôle géométrique de véhicule, du type comportant au moins un élément (20-23) apte à être solidarisé à une jante de roue (5) de véhicule au moyen d'une griffe de fixation ou analogue, caractérisé en ce que le dispositif comporte des moyens (1-4, 8-11, 15-17, 18a-18c) aptes à faire varier l'aspect de l'élément (20-23) en fonction de l'angle de visée sous lequel il est vu, sans constituer une image en perspective de cet élément.

2. Dispositif selon la revendication 1, caractérisé en ce que les dits moyens (2-4, 8-11, 15-17, 18a-18c) de variation d'aspect sont indépendants de la distance séparant le point de visée du dispositif.

3. Dispositif selon la revendication 1 ou la revendication 2, caractérisé en ce que les dits moyens (1-4, 8-11, 15-17, 18a-18c) comprennent au moins une paire (8-11) de grilles (1,2 ; 3,4) de moiré espacées l'une de l'autre.

4. Dispositif selon la revendication 3, caractérisée en ce qu'au moins une grille (1-4) de moiré la plus proche du point de visée (0) comporte un moyen de repérage définissant une origine de mesure.

5. Dispositif selon la revendication 3 ou la revendication 4, caractérisé en ce que dans une paire de grilles, deux grilles (1,2) de moiré espacées sont sensiblement parallèles l'une à l'autre.

6. Dispositif selon la revendication 3 ou la revendication 4, caractérisé en ce que, dans une paire de grilles, deux grilles (3,4) de moiré espacées sont disposées sur deux surfaces formant un angle l'une par rapport à l'autre.

7. Dispositif selon la revendication 3 ou 4, caractérisé en ce que dans une paire de grilles, deux grilles de moiré espacées (8-11) comportent chacune une première grille (8a, 9a, 10a, 11a) pour une mesure angulaire fine et une deuxième grille (8b, 9b, 10b, 11b) pour une mesure angulaire absolue.

8. Dispositif selon l'une quelconque des revendications 3 à 7, caractérisé en ce qu'un élément de dispositif comporte au moins deux paires (8-11) de grilles qui ne sont pas parallèles entre elles.

9. Dispositif selon l'une quelconque des revendications précédentes, caractérisé en ce qu'il comporte au moins une caméra (26, 27) ou moyen d'observation apte à observer l'aspect de chaque élément (20 à 23) fixé à une jante de roue de véhicule et à transmettre un signal représentatif de ladite observation à une unité centrale programmable (28), de manière à calculer des angles d'orientation dudit élément (20 à 23) et à en déduire des paramètres physiques représentatifs de la géométrie du véhicule.

10. Dispositif selon la revendication 9, caractérisé en ce que le dispositif comporte deux caméras (26, 27) espacées d'une distance supérieure à la voie du véhicule à contrôler.

Fig. 1

Fig. 2

Fig. 3

image de R

Sr

d(A)

Fig.4

image de R

S

Sr

Fig.5

fig.6

fig.7

fig.8

fig.9

Fig.10

Fig.11

INITIALISATION

↓

SAISIE D'IMAGES
PRISES DE VUE

↓

RECHERCHE
LOCALISATION

↓

INDEXAGE
FOCALISATION

↓

ANALYSE
D'OBSERVATION DE MOIRE

↓

CALCUL DES 5 ANGLES
INDEPENDANTS

↓

POUSSEE DU VEHICULE
MESURE DU VOILE
DES ROUES

↓

CALCUL DE LA GEOMETRIE
GLOBALE

↓

BASE DE DONNEES
VEHICULES

→

CONTROLE DE COHERENCE
MEMORISATION

↓

AFFICHAGE | IMPRESSION | ARCHIVAGE

Fig.12

**Office européen des brevets**

**RAPPORT DE RECHERCHE EUROPEENNE**

Numero de la demande

EP 97 40 1006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 647 829 A (MULLER BEM)<br>* abrégé; figures 1,5-11 * | 1-3,6,9 | G01B11/275<br>G01B11/24 |
| D | & FR 2 711 238 A | | |
| | --- | | |
| Y | FR 2 406 186 A (BERGKVIST LARS A)<br>* page 3 - page 5; figures 1-5 * | 1-3,6,9 | |
| | --- | | |
| A | FR 2 368 017 A (BERGKVIST LARS A)<br>* revendication 1; figures 1-4 * | 1 | |
| | --- | | |
| A | FR 2 192 288 A (SIEMENS AG)<br>* revendication 1; figures 1-4 * | 1-3 | |
| | --- | | |
| A | WO 88 04765 A (MOAGON AB)<br>* abrégé; figures 1,5-8 * | 1 | |
| | ----- | | |

**DOMAINES TECHNIQUES RECHERCHES (Int.Cl.6)**

G01B

Le présent rapport a été établi pour toutes les revendications

| Lieu de la recherche | Date d'achèvement de la recherche | Examinateur |
|---|---|---|
| BERLIN | 4 Août 1997 | Vorropoulos, G |